# EUROPÄISCHE PATENTSCHRIFT

(11) **EP 0 442 127 B1**
(45) Veröffentlichungstag und Bekanntmachung des Hinweises auf die Patenterteilung: **02.03.1994**
(21) Anmeldenummer: 90125187.6
(22) Anmeldetag: 21.12.1990
(51) Int. Cl.: F16G 3/10

(54) **Verbindung für Fördergurte oder Kraftübertragungsriemen**
Joining of conveyer belts or drive belts
Jonction de courroies transporteuses ou de transmission

(30) Priorität: 16.02.1990 DE 4004784
(43) Veröffentlichungstag der Anmeldung: 21.08.1991
(73) Patentinhaber: Continental Aktiengesellschaft, 30165 Hannover (DE)
(72) Erfinder: Alles, Rainer, Dr., W-3004 Isernhagen (DE)

(56) Entgegenhaltungen:
- EP-A- 0 185 006
- BE-A- 880 021
- DE-B- 2 511 671
- FR-A- 1 334 341

## Beschreibung

Die Erfindung betrifft eine Verbindung von zwei Endabschnitten eines Fördergurtes oder eines Kraftübertragungsriemens aus elastomerem Werkstoff gemäß dem Oberbegriff des Anspruchs 1.

Der in den Fördergurten oder Kraftübertragungsriemen eingebettete Zugträger hat die Aufgabe, die an den Antrieben eingeleiteten Kräfte zu übertragen. Im gewebeverstärkten Gurt oder Riemen besteht der Zugträger aus einer bzw. mehreren übereinanderliegenden Gewebelagen. Bei einem Stahlseilgurt wird der Zugträger aus in einer Ebene liegenden und sich in Längsrichtung parallel zueinander erstreckenden Stahlseilen gebildet, die in Kerngummi eingebettet sind. Anstatt der Stahlseile kann der Zugträger auch aus anderen fadenförmigen Festigkeitsträgern bestehen.

Zur Endlosschließung eines offenen Gurtes oder Riemens und zum Aneinanderfügen von mehreren Teillängen werden in den meisten Fällen Verbindungen durch Vulkanisation hergestellt, bei denen die Gurtzugkräfte von einem Festigkeitsträger auf den anderen durch Schubspannungen im Gummi übertragen werden. In der Verbindungsstelle werden die freien Enden des Zugträgers zusammengelegt. Hierbei können einzelne Lagen oder Seile des Zugträgers stumpf voreinandergelegt sein oder in überlappender oder ineinandergeschachtelter Anordnung frei über oder zwischen dem Zugträger des anderen Gurtendes liegen. In jedem Fall sind die Enden des Zugträgers frei in den umgebenden elastomeren Werkstoff eingebettet.

In der Verbindungsstelle werden die Zugkräfte des einen Zugträgers zum anderen Zugträger durch die dazwischenliegenden Gummischichten übertragen. Die Kräfte treten in Form einer Scherkraft auf.

Bei Drahtseilfördergurten erfolgt die Kraftübertragung vom Seil des einen zum Seil des anderen Gurtendes über die dazwischenliegende Gummischicht, die eine Mindestdicke nicht unterschreiten darf.

Zur Übertragung größerer Zugkräfte werden hochfeste Fördergurte eingesetzt, deren Verbindungsstelle mehrstufig ausgebildet ist.

Um einen Schutz des Fördergurtes gegen Beschädigungen oder Zerstörungen zu erreichen, sind die Fördergurte mit einer üblicherweise zwischen dem Bandkern und der oberen und/oder unteren Deckschicht eingebauten, als Schnitt- und Durchdringungsschutz wirkenden Einlage in Form von aus Stahlseilen oder ähnlichen fadenförmigen Gebilden bestehenden, bis auf schmale Randzonen über die gesamte Bandbreite geradlinig schräg oder quer zur Längsrichtung des Fördergurtes verlaufenden Verstärkungseinlage versehen. Diese schützende Querarmierung muß auch in der Verbindungsstelle des Fördergurtes durchlaufen.

Eine Querarmierung allein in der Verbindungsstelle eines ansonsten nicht querverstärkten Gurtes oder Riemens vorzusehen, ist ebenfalls bekannt. Die Querarmierung dient dabei der Erhöhung der Schubsteifigkeit in dem Verbindungsbereich.

Aus der DE-PS 25 11 671 ist eine Verbindung der aneinanderstoßenden Endabschnitte eines aus Gummi oder gummiähnlichen Kunststoffen bestehenden Fördergurtes oder Kraftübertragungsriemens bekannt, in der eine Querarmierung angeordnet ist, die aus einer mit gegenseitigen Abständen zueinander parallelen Fäden oder Drähten aufgebauten Verstärkungseinlage besteht, wobei die Fäden oder Drähte quer oder im wesentlichen quer zu dem Zugträger verlaufen. Die querliegenden Cordfäden weisen im Mittelbereich der Verbindung die engsten Abstände auf, die zu den Endbereichen nach beiden Richtungen zunehmend größer werden. Mit dieser Querarmierung wird die gesamte Länge der Verbindung abgedeckt.

Zur Herstellung von Verbindungen von Stahlseilfördergurten wird nach DIN 22129, Teil 4, vorgeschrieben, daß eine Querarmierung in der Tragseite auch im Bereich der Verbindung eingebracht werden soll, wenn die Querarmierung über die gesamte Fördergurtlänge verläuft. Von den Übergangszonen, in denen die Deckplatten zum Gurtkern hin abgeschrägt sind, ist jedoch aus handwerklichen Gründen ein kleiner Abstand von etwa 50 mm einzuhalten.

Die schwächste Stelle eines Fördergurtes ist bekanntermaßen seine Verbindung. Die Dauerfestigkeit des Gurtes wird von der dynamischen Haltbarkeit der Verbindung begrenzt.

Es wurde festgestellt, daß die Auflösung der Verbindung an den freien Enden der beiden Zugträgerenden beginnt. Bei einem Drahtseil-Fördergurt kann sich diese Auflösung in einem Herausarbeiten der Drahtseilenden auswirken. Als schwächster Teil der Verbindung erweist sich somit der elastomere Werkstoff an den freien Enden des Zugträgers, auch wenn die dort übertragene Kraft im Vergleich zu den einzelnen Zugkräften im Zugträger sehr klein ist. Dieses wird darauf zurückgeführt, daß an den freien Enden im elastomeren Werkstoff Schubspannungen entstehen, die proportional zu den Zugspannungen sind. Die hohe Schubbeanspruchung des elastomeren Werkstoffs an den freien Enden ist die Ursache für den dortigen Beginn einer möglichen Gurtauflösung.

Um die Scherungen in der Verbindung zu verringern und die dynamische Festigkeit zu erhöhen, ist es bekannt, die Abstände zwischen den Zugträgern durch besondere Legeschemata zu vergrößern. Auch angeordnete Querarmierungen tragen zu der Verringerung bei, weil sie die Schubsteifigkeit erhöhen. Die Forderung nach einer weiteren Erhöhung der dynamischen Festigkeit der Verbindung bleibt aber bestehen.

Der Erfindung liegt die Aufgabe zugrunde, die dynamische Festigkeit der Verbindung von Fördergurten oder Kraftübertragungsriemen zu erhöhen.

Die Aufgabe wird erfindungsgemäß dadurch gelöst, daß die Verstärkungseinlage im Bereich der freien Enden der Zugträger jeweils unterbrochen ist.

An den in der Verbindungsstelle frei endenden Zugträgern ist die Querverstärkung unterbrochen. Es wurde überraschend festgestellt, daß durch diese Maßnahme die dynamische Festigkeit der Verbindung deutlich erhöht wird. Ein Herausarbeiten der freien Enden des Zugträgers wurde weiter minimiert. Diese vorteilhafte Wirkung wird darauf zurückgeführt, daß die Wahrscheinlichkeit des Auftretens von Störungen an den freien Enden der zu verbindenden Zugträger verringert wird, weil für die Schubverformungen ein größeres Gummivolumen zur Verfügung steht. Durch dieses größere Gummivolumen werden die Scherungen an den Zugträgerenden, die die kritischen Stellen einer Gurt- oder Riemenverbindung darstellen, kleiner.

An den freien Enden steht das Deckplattenvolumen zur Verfügung, so daß auftretende Schubverformungen sich im Gummi ausbreiten können. Durch den erzielten kleineren Schubwinkel werden Spannungsspitzen im Bereich der freien Enden vermieden.

In vorteilhafter Ausgestaltung der Erfindung erstreckt sich der unterbrochene Abschnitt der Verstärkungseinlage über die gesamte Gurt- oder Riemenbreite. Die Herstellung der Verbindung zeichnet sich dadurch durch Einfachheit aus.

In weiterer vorteilhafter Ausgestaltung der Erfindung weist die Verstärkungseinlage im Bereich der freien Enden der Zugträger fensterförmige Unterbrechungen auf. Diese Ausgestaltung ist für Verstärkungseinlagen im Verbindungsbereich vorteilhaft, die aus einer Gewebebahn bestehen.

Weitere Ausgestaltungen der Erfindung werden in den Ansprüchen 4 und 5 gekennzeichnet.

Durch die Erfindung wird die dynamische Haltbarkeit eines Fördergurtes oder Kraftübertragungsriemens bei weiterhin guter Zugfestigkeit erhöht.

Anhand der Zeichnung werden nachstehend drei Ausführungsbeispiele der Erfindung näher erläutert. Es zeigt
- Fig. 1: eine zweistufige Verbindung eines Drahtseil-Fördergurtes,
- Fig. 2: eine längsgeschnittene Seitenansicht einer Fingerspleiß-Verbindung eines Textil-Fördergurtes,
- Fig. 3: eine Draufsicht auf den Textil-Fördergurt nach Fig. 2 unter Fortlassung der äußeren Gummiabdeckschicht,
- Fig. 4: eine zweistufige Verbindung eines Drahtseil-Fördergurtes mit einem Abdeckgewebe als Verstärkungseinlage.

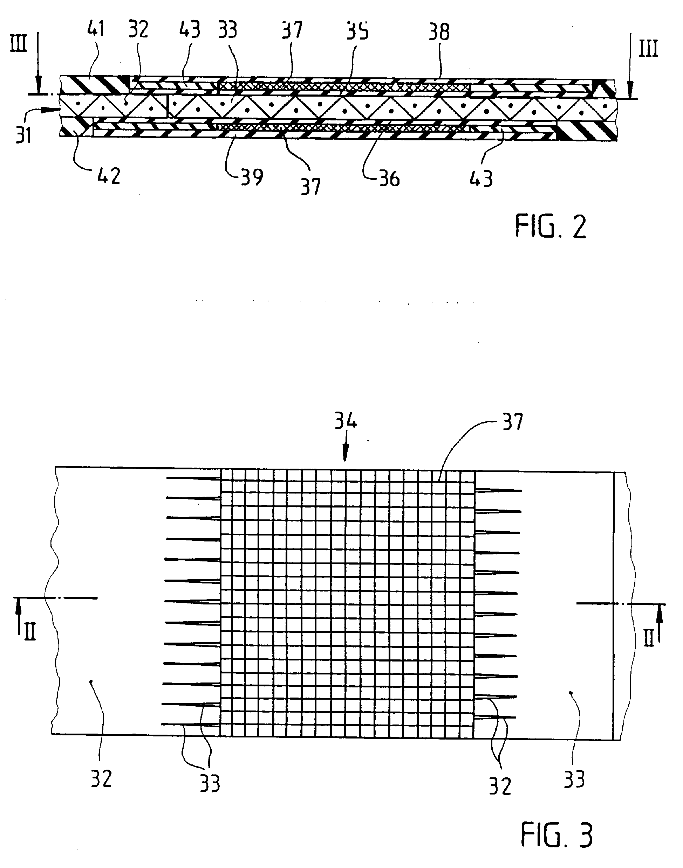

In der Verbindung in Fig. 1 sind die Drahtseile 11 und 12 von zwei Fördergurtenden 13 bzw. 14 stufenförmig ineinandergelegt. Nach je einem vom linken und rechten Gurtende 13 bzw. 14 durchgehend nebeneinander gelegten Seil 11 bzw. 12 ist das nächste korrespondierende Seilpaar so abgeschnitten, daß es in der Verbindungsmitte voreinanderstößt. Die freien Enden 15, 16 der Drahtseile 11, 12 liegen in der gezeigten Verbindung in drei quer zu der Gurtbreite angeordneten Bereichen 17, 18 und 19.

In der Verbindung sind zwischen den Bereichen 17, 18 und 19 der freien Enden 15, 16 der Drahtseile 11, 12 Querarmierungen 21 und 22 aus Fäden 23 eingebracht, die quer zu den Drahtseilen 11 und 12 in die hier nicht dargestellte obere Verbindungsdeckplatte einvulkanisiert werden. Die Fäden 23 können als Einzelfäden eingelegt oder durch Bindefäden zusammengefaßt werden. Die Fäden 23 können auch aus metallischem Werkstoff bestehen. Die Bereiche 17, 18, 19 der freien Enden 15, 16 bleiben von den Querarmierungen 21 und 22 unbedeckt.

Der in den Fig. 2 und 3 angedeutete Textil-Fördergurt weist einen Zugträger aus einer textilen Gewebebahn 31 auf. Die freien Enden 32 und 33 der beiden zu verbindenden Zugträgerenden sind entsprechend spitzenförmig zugeschnitten und in einer Fingerspleiß-Verbindung 34 ineinandergelegt.

Die Verbindungsstelle ist beidseitig von je einer dünnen Kerngummischicht 35, 36 abgedeckt. Auf diesen Kerngummischichten 35, 36 ist jeweils eine Querverstärkung aus einer aufgebrachten Gewebelage 37, z.B. einem Gittergewebe, vorhanden. Die beidseits angeordneten Gewebelagen 37 sind von äußeren Gummiplatten 38 und 39 abgedeckt, die in ihrer Höhe mit den Oberflächen der Deckplatten 41 und 42 des Fördergurtes abschließen.

Die querverstärkenden Gewebeeinlagen 37 erstrecken sich zwischen den spitzenförmigen Enden 32, 33 des Zugträgers 31 und lassen die beiden Bereiche der freien Enden 32, 33 des Zugträgers 31 unbedeckt. Angrenzend an die Gewebeeinlagen 37 sind seitlich Ausgleichsstreifen 43 aus Gummi in den Verbund eingelegt.

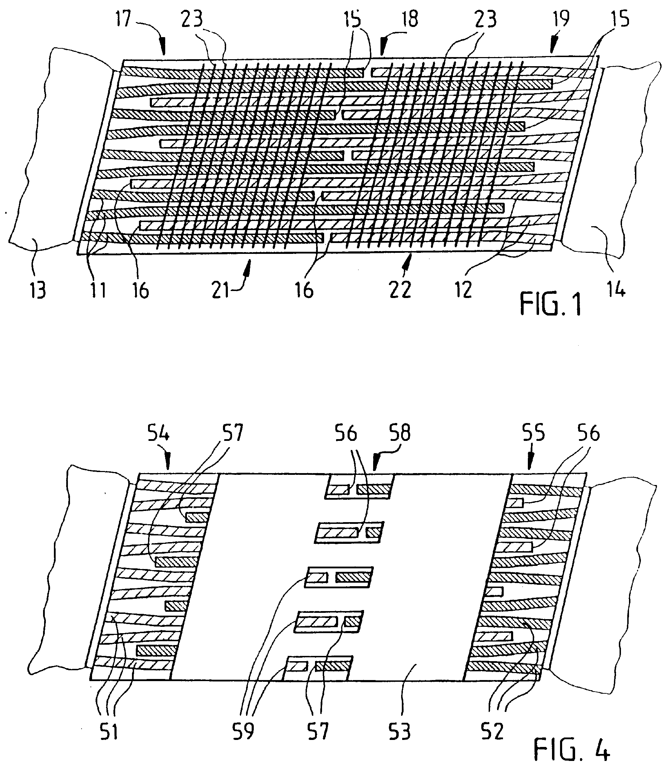

Die Ausführungsform einer Verbindung eines Stahlseil-Fördergurtes nach Fig. 4 weist eine über den Stahlseilen 51, 52 angeordnete und in Kerngummi eingebettete Gewebelage 53 auf, die den linken und rechten Bereich 54 bzw. 55 der freien Enden 56, 57 der Stahlseile 51, 52 unbedeckt läßt. Im Mittelbereich 58 der Verbindung liegen einige Drahtseilenden 56, 57 auf Stoß unter dem notwendigen Abstand einander gegenüber. Die Gewebelage 53 ist im Bereich dieser Stoßstellen fensterförmig ausgeschnitten und läßt diese Stoßstellenbereiche 59 ebenfalls unbedeckt.

## Patentansprüche

1. Verbindung von zwei Endabschnitten eines aus elastomerem Werkstoff bestehenden Fördergurtes oder Kraftübertragungsriemens mit einem zwischen Deckschichten eingebetteten, aus textilem oder metallischem Werkstoff bestehenden Zugträger (11, 12) mit folgenden Merkmalen:
a) die freien Enden (13, 14) der Zugträger sind in einer Verbindungsstelle zusammengelegt,
b) die Verbindungsstelle der Zugträger wird von einer in elastomerem Werkstoff eingebetteten Verstärkungseinlage (21, 22) überdeckt,
c) die Verstärkungseinlage besteht aus einem Abdeckgewebe oder aus quer oder im wesentlichen quer zu den Zugträgern ausgerichteten Fäden oder Drähten,
**gekennzeichnet** durch folgendes Merkmal:
d) im Bereich (17,18,19; 32,33;54,55,58) der freien Enden (15,16; 32,33; 56,57) der Zugträger (11,12; 31; 51,52) ist die Verstärkungseinlage (21,22; 37; 53) jeweils unterbrochen.

2. Verbindung nach Anspruch 1, dadurch gekennzeichnet, daß sich der unterbrochene Bereich (17,18,19) der Verstärkungseinlage (21,22) über die gesamte Breite des Gurtes oder Riemens erstreckt.

3. Verbindung nach Anspruch 1, dadurch gekennzeichnet, daß die Verstärkungseinlage (53) im Bereich der freier Enden (56,57) der Zugträger (51,52) fensterförmige Unterbrechungen (59) aufweist.

4. Verbindung nach Anspruch 1 oder 2, dadurch gekennzeichnet, daß die Verstärkungseinlage (21,22) aus im wesentlichen quer zu den Zugträgern (11,12) liegenden textilen oder metallischen Corden besteht.

5. Verbindung nach einem der Ansprüche 1 bis 3, dadurch gekennzeichnet, daß die Verstärkungen aus einer Gewebelage (37,53) bestehen.

## Claims

1. Connection of two end portions of a conveyor belt or power-transmitting pulley, which is formed from elastomeric material and has a tensioning member (11,12), which is embedded between cover layers and is formed from textile or metallic material, having the following features:
a) the free ends (13,14) of the tensioning members are laid together at a junction point,
b) the junction point of the tensioning members is covered by a reinforcing ply (21,22), which is embedded in elastomeric material,
c) the reinforcing ply comprises a cover fabric or filaments or wires which are orientated transversely or substantially transversely relative to the tensioning members,
characterised by the following feature:
d) the reinforcing ply (21,22; 37; 53) is interrupted in the respective region (17,18,19; 32,33; 54,55,58) of the free ends (15,16; 32,33; 56,57) of the tensioning members (11,12; 31; 51,52).

2. Connection according to claim 1, characterised in that the interrupted region (17,18,19) of the reinforcing ply (21,22) extends over the entire width of the belt or pulley.

3. Connection according to claim 1, characterised in that the reinforcing ply (53) has window-like openings (59) in the region of the free ends (56,57) of the tensioning members (51,52).

4. Connection according to claim 1 or 2, characterised in that the reinforcing ply (21,22) is formed from textile or metallic cords, which extend substantially transversely relative to the tensioning members (11,12).

5. Connection according to one of claims 1 to 3, characterised in that the reinforcements are formed from a fabric ply (37,53).

## Revendications

1. Jonction de deux sections d'extrémité d'une courroie transporteuse ou d'une courroie de transmission, composée en un matériau élastomère, avec un support de traction (11, 12) noyé entre des couches de couvertures, composé d'un matériau textile ou métallique, présentant les caractéristiques suivantes:
a) Les extrémités libres (13, 14) du support de traction sont réunies en un point de liaison,
b) le point de liaison du support de traction est recouvert par une garniture de renforcement (21, 22) noyée dans le matériau élastomère,
c) la garniture de renforcement est composée d'un tissage de recouvrement ou de filaments ou fils, orientés transversalement ou sensiblement transversalement par rapport aux supports de traction,
caractérisée par la propriété suivante
d) la garniture de renforcement (21 22; 37; 53) est chaque fois interrompue dans la zone (17,18,19; 32,33; 54,55,58) des extrémités libres (15,16; 32,33; 56,57) des supports de traction (11, 12; 31; 51, 52).

2. Jonction selon la revendication 1, caractérisée en ce que la zone (17,18,19) interrompue de la garniture de renforcement (21,22) s'étend sur toute la largeur de la bande ou de la courroie.

3. Jonction selon la revendication 1, caractérisée en ce que la garniture de renforcement (53) présente des interruptions (59) en forme de fenêtre, dans la zone des extrémités libres (56,57) des supports de traction (51,52).

4. Jonction selon la revendication 1 ou 2, caractérisé een ce que la garniture de renforcement (21,22) est composée de cordes textiles ou métalliques, placées sensiblement transversalement par rapport aux supports de traction (11,12).

5. Jonction selon l'une des revendications 1 à 3, caractérisée en ce que les renforcements sont composés d'une couche tissée (37,53).
